# EUROPÄISCHE PATENTANMELDUNG

(11) **EP 4 238 405 A1**
(43) Veröffentlichungstag der Anmeldung: **06.09.2023**
(21) Anmeldenummer: 23153511.3
(22) Anmeldetag: 26.01.2023
(51) Int. Cl.: A01D 41/02, A01D 61/00

(54) **EINZUGSKANAL UND DAMIT AUSGESTATTETE LANDWIRTSCHAFTLICHE MASCHINE**

(30) Priorität: 02.03.2022 DE 102022104899
(71) Anmelder: CLAAS Selbstfahrende Erntemaschinen GmbH, 33428 Harsewinkel (DE)
(72) Erfinder: Kortenjann, Ludger, 48231 Warendorf (DE)
(74) Vertreter: CLAAS Gruppe

(57) **Zusammenfassung**

Die Erfindung betrifft einen Einzugskanal (6a, 6b) zum Verbinden eines Erntevorsatzes (4) mit einer als Mähdrescher (2) ausgeführten landwirtschaftlichen Erntemaschine (1), wobei die landwirtschaftliche Erntemaschine (1) Mitglied einer Baureihe (3) ist, deren Mitglieder sich voneinander wenigstens in ihren physischen Abmessungen unterscheiden, wobei der Einzugskanal (6a, 6b) wenigstens ein erstes kanalseitiges korrespondierendes Merkmal (36) aufweist, dessen Abstand (40, 41, 42) zu wenigstens einem weiteren kanalseitigen korrespondierenden Merkmal (36) und/oder einem fahrzeugseitigen korrespondierenden Merkmal (38) der landwirtschaftlichen Erntemaschine (1, 2) baureihenübergreifend einheitlich ist.

## Beschreibung

Die Erfindung betrifft einen Einzugskanal, der in einer selbstfahrenden Erntemaschine wie etwa einem Mähdrescher einen Erntevorsatz mit dem Trägerfahrzeug verbindet, um vom Erntevorsatz aufgenommenes Erntegut Verarbeitungsaggregaten wie etwa einem Dreschwerk im Mähdrescher zuzuführen.

Ein solcher Einzugskanal ist z.B. in DE 34 06 696 C3 oder EP1 385 366 B1 beschrieben.

Landmaschinenhersteller fertigen in der Regel nicht ein einzelnes Modell von Trägerfahrzeug, sondern Baureihen, deren Modelle sich voneinander in diversen Leistungsparametern, maximalen Abmessungen und Gewicht eines mit dem Trägerfahrzeug handhabbaren Erntevorsatzes, der dafür benötigten Antriebsleistung und infolgedessen auch der Größe der Trägerfahrzeuge selbst unterscheiden. Die dafür benötigten Bauteile in jeweils modellspezifisch unterschiedlichen Größen zu fertigen, verursacht hohe Kosten. Es besteht daher das Bedürfnis, die unterschiedlichen Maschinenmodelle einer Baureihe mit einem möglichst hohen Anteil an baureihenübergreifend identischen Bauteilen fertigen zu können.

DE 34 06 696 C3 schlägt vor, die Torsionssteifigkeit eines Einzugskanals für einen Mähdrescher zu verbessern, indem um dessen Wandteile herum Versteifungsrahmen befestigt sind, wodurch der Einzugskanal lokal doppelwandig wird. Die Zahl der Versteifungsrahmen ist nicht festgelegt; wenn jeweils so viele vorgesehen werden, wie für eine gegebene Torsionssteifigkeit erforderlich, dann können Einzugskanäle, für unterschiedlich große und schwere Erntevorsätze erhalten werden, indem jeweils so viele Versteifungsrahmen angebracht werden, wie für Gewicht und Trägheitsmoment des jeweils zugeordneten Erntevorsatzes erforderlich. Unberücksichtigt bleibt dabei jedoch, dass mit einem breiten und dementsprechend schweren Erntevorsatz höhere Erntegutflüsse erzielt werden als mit einem schmalen, leichten. Wenn es zum Bewältigen des höheren Gutflusses nötig ist, den Querschnitt des Einzugskanals zu vergrößern, dann werden für den Kanal mit vergrößertem Querschnitt wieder modellspezifische Versteifungsrahmen benötigt. Um alternativ die Förderleistung des Einzugskanals bei gleichbleibendem Querschnitt zu steigern, muss dessen Antriebsmechanik modellspezifisch angepasst werden. Das Bedürfnis nach einem möglichst hohen Anteil von gleichen Bauteilen in verschiedenen Modellen ist daher nicht ohne weiteres zu befriedigen.

Es ist deshalb Aufgabe der Erfindung die beschriebenen Nachteile des Standes der Technik zu vermeiden und insbesondere eine Einzugskanalstruktur zu schaffen, die eine hohe Flexibilität bei einem hohen Anteil von Gleichteilen über verschiedenste Baureihen einer landwirtschaftlichen Arbeitsmaschine, hier Mähdrescher, sicherstellt.

Diese Aufgabe wird erfindungsgemäß durch die kennzeichnenden Merkmale des Anspruchs 1 gelöst.

Indem der Einzugskanal zum Verbinden eines Erntevorsatzes mit einer als Mähdrescher ausgeführten landwirtschaftlichen Erntemaschine, wobei die landwirtschaftliche Erntemaschine Mitglied einer Baureihe ist, deren Mitglieder sich voneinander wenigstens in ihren physischen Abmessungen unterscheiden, wenigstens ein erstes kanalseitiges korrespondierendes Merkmal aufweist, dessen Abstand zu wenigstens einem weiteren kanalseitigen korrespondierenden Merkmal und/oder einem fahrzeugseitigen korrespondierenden Merkmal der landwirtschaftlichen Erntemaschine baureihenübergreifend einheitlich ist wird sichergestellt, dass eine Einzugskanalstruktur geschaffen wird, die eine hohe Flexibilität bei einem hohen Anteil von Gleichteilen über verschiedenste Baureihen einer landwirtschaftlichen Arbeitsmaschine, hier Mähdrescher, ermöglicht.

In einer vorteilhaften Ausgestaltung der Erfindung wird das erfindungsgemäße korrespondierende Merkmal von einem geometrischen Punkt in einem zwei- oder dreidimensionalen Koordinatensystem gebildet, welcher eingerichtet ist, die Lage des korrespondierenden Merkmals im Raum oder in der Ebene eindeutig zu beschreiben. Dies hat den Effekt, dass dem jeweiligen korrespondierenden Merkmal baureihenübergreifend identische Raum- oder Flächenkoordinaten zugeordnet werden können, sodass die korrespondierenden Merkmale baureihenübergreifend in dem übergeordneten Koordinatensystem dieselbe Position einnehmen.

In einer vorteilhaften Weiterbildung der Erfindung wird der Abstand zwischen korrespondierenden Merkmalen von einem Vektor von nichtverschwindender Länge in einem zwei- oder dreidimensionalen in Bezug auf die landwirtschaftliche Erntemaschine festen Koordinatensystem gebildet, sodass die Positionen korrespondierender Merkmale zueinander eindeutig bestimmt sind.

Indem in einer vorteilhaften Ausgestaltung der Erfindung der Einzugskanal zumindest eine die Schwenkachse des Einzugskanals bildende Antriebsachse, zumindest eine die Antriebsenergie an einen Erntevorsatz weiterleitende Vorgelegewelle, zumindest eine einen Hubzylinder aufnehmende Aufnahme und zumindest eine den Erntevorsatz aufnehmende Aufnahme umfasst und das ein, mehrere oder alle diese Elemente dem Einzugskanal zugeordneten korrespondierenden Merkmale bilden wird sichergestellt, dass durch die identische Anordnung von Baugruppen, welche in Kontakt mit dem Vorsatzgerät und dem Mähdrescher stehen eine sowohl, den Einzugskanal, den jeweiligen Erntevorsatz und den Mähdrescher betreffende baureihenübergreifende Nutzung von dem jeweiligen Einzugskanal zugeordneten Gleichteilen ermöglicht.

In diesem Zusammenhang ist es auch von Vorteil, wenn in einer weiteren vorteilhaften Ausgestaltung der Erfindung die landwirtschaftliche Erntemaschine zumindest eine Drehachse einer Dreschtrommel, zumindest eine Drehachse eines Reinigungsgebläses, zumindest eine die Schwenkachse des Einzugskanals bildende Antriebsachse, zumindest eine Schwenkachse des zumindest einen Hubzylinders und zumindest eine Drehachse einer Vorderachse der landwirtschaftlichen Erntemaschine umfasst und das ein, mehrere oder alle dieser Elemente der landwirtschaftlichen Erntemaschine zugeordnete korrespondierende Merkmale bilden. Dies stellt erfindungsgemäß sicher, dass durch die identische Anordnung von Baugruppen, welche in Kontakt mit dem Vorsatzgerät und dem Mähdrescher stehen eine sowohl, den Einzugskanal, den jeweiligen Erntevorsatz und den Mähdrescher betreffende baureihenübergreifende Nutzung von dem jeweiligen Einzugskanal zugeordneten Gleichteilen ermöglicht.

Eine deutliche Senkung der Fertigungskosten ergibt sich insbesondere dann, wenn in einer vorteilhaften Weiterbildung der Erfindung der Einzugskanal von Gehäuseteilen gebildet wird und die Gehäuseteile zumindest rechts- und linksseitige Verkleidungsteile, zumindest eine der Schwenkachse zugeordnete Gehäusestruktur, zumindest eine Versteifungsstruktur und den Hubzylindern zugeordnete Aufnahmen umfasst, wobei die dem Einzugskanal zugeordneten korrespondierenden Merkmale bewirken, dass zumindest die rechts- und linksseitige Verkleidungsteile und/oder die der Schwenkachse zugeordnete Gehäusestruktur und/oder die Versteifungsstruktur und/oder die den Hubzylindern zugeordneten Aufnahmen baureihenübergreifend gleich ausgeführt sind.

Eine weitere vorteilhafte Ausgestaltung der Erfindung ergibt sich dann, wenn zumindest einer Baureihe von Mähdreschern ein Einzugskanal für hohe Gutdurchsätze und ein Einzugskanal für niedrigere Durchsätze zugeordnet ist und wobei die Einzugskanäle dieser Baureihe unterschiedliche Breite aufweisen und die Einzugskanäle aller Baureihen zugleich die gleiche Länge aufweisen. Auf diese Weise wird einerseits sichergestellt, dass die Einzugskanäle über alle Baureihen kostenoptimiert dimensioniert sind und aufgrund der gleichen Länge aller Einzugskanäle dennoch sichergestellt wird, dass sich über alle Einzugskanäle aller Baureihen ein großer Gleichteileumfang einstellt. Dieser Effekt wird auch dadurch noch unterstützt, wenn in einer weiteren vorteilhaften Ausgestaltung die Einzugskanäle der Mähdrescher der weiteren Baureihen dem für die niedrigeren Gutdurchsätze ausgelegten Einzugskanal entsprechen.

Da hohe Gutdurchsätze in der Regel im Mähdrescher durch größere Arbeitsbreiten erzielt werden ist in einer vorteilhaften Ausgestaltung der Erfindung vorgesehen, dass die Gutfördereinheit des Einzugskanals für hohe Gutdurchsätze und die Gutfördereinheit des Einzugskanals für niedrigere Durchsätze zumindest unterschiedlich breit ausgeführt sind.

In einer vorteilhaften Ausgestaltung der Erfindung bleibt der Einzugskanal weiter zumindest Basiselemente einer der jeweiligen Gutfördereinheit zugeordneten Kettenführung, zumindest einen Adaptierrahmen, zumindest die jeweilige Vorgelegewelle, zumindest eine der Vorgelegewelle zugeordnete Riemenscheibe, die jeweilige Antriebsachse des jeweiligen Einzugskanals, eine der Antriebsachse zugeordnete Riemenscheibe, die den jeweiligen Erntevorsatz aufnehmenden Aufnahmen und diesen zugeordnete Stellelemente, wobei die die dem Einzugskanal zugeordneten korrespondierenden Merkmale bewirken, dass zumindest die Kettenführungen und/oder der jeweilige Adaptierrahmen und/oder die jeweilige Vorgelegewelle und/oder die der jeweiligen Vorgelegewelle zugeordnete Riemenscheibe und/oder die jeweilige Antriebsachse des Einzugskanals und/oder die der jeweiligen Antriebsachse zugeordnete Riemenscheibe und/oder die den jeweiligen Erntevorsatz aufnehmenden Aufnahmen und/oder die diesen zugeordneten Stellelemente baureihenübergreifend gleich ausgeführt sind.

Eine Optimierung der Herstellkosten ergibt sich auch bereits dann, wenn in einer vorteilhaften Ausgestaltung der Erfindung die baureihenübergreifend gleich ausgeführten Kettenführungen und/oder Adaptierrahmen und/oder Vorgelegewellen und/oder der jeweiligen Vorgelegewelle zugeordneten Riemenscheiben und/oder die Antriebsachsen des Einzugskanals und/oder die der jeweiligen Antriebsachse zugeordneten Riemenscheibe und/oder die den jeweiligen Erntevorsatz aufnehmenden Aufnahmen und/oder die diesen zugeordneten Stellelemente auf die Einzugskanäle für einen reduzierten Erntegutdurchsatz beschränkt sind

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: verschiedene Baureihen eines Mähdreschers jeweils den erfindungsgemäßen Einzugskanal umfassend
- Figur 2: generelle Aspekte des erfindungsgemäßen Einzugskanals
- Figur 3: generelle Aspekte der erfindungsgemäßen korrespondierenden Merkmale
- Figur 4: die Beschreibung technischer Effekte der korrespondierenden Merkmale
- Figur 4a: Detaildarstellung zu Figur 4
- Figur 5: die Beschreibung weiterer technischer Effekte der korrespondierenden Merkmale

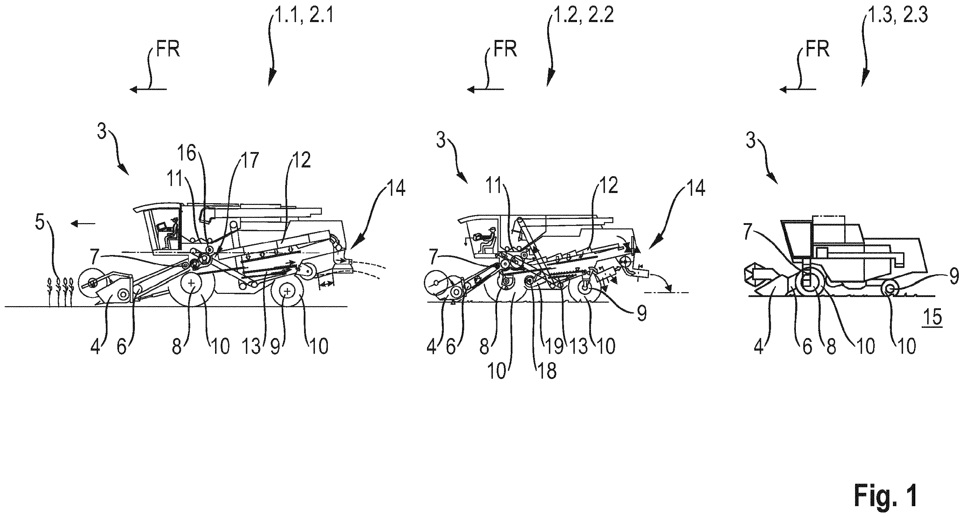

Fig. 1 zeigt als Mähdrescher 2.1 bis 2.3 ausgeführte landwirtschaftliche Arbeitsmaschinen 1.1 bis 1.3 einer Baureihe 3, wobei sich die Mähdrescher 2.1 bis 2.3 untereinander zumindest in ihren physischen Eigenschaften, insbesondere ihrer Länge, Höhe und Breite unterscheiden. Jeder der Mähdrescher 2.1 bis 2.3 nimmt in seinem frontseitigen Bereich einen Erntevorsatz 4 auf, der zum Ernten eines Erntegutbestandes 5 eingerichtet ist. Jeder der Erntevorsätze 4 wird in seinem rückwärtigen Bereich von einem erfindungsgemäßen Einzugskanal 6 aufgenommen, wobei jeder der Einzugskanäle 6 in seinem rückwärtigen Bereich in an sich bekannter und daher nicht näher beschriebenen Weise um eine quer zur Fahrtrichtung FR verlaufende Schwenkachse 7 schwenkbeweglich von dem jeweiligen Mähdrescher 2.1 bis 2.3 aufgenommen wird. Jeder der Mähdrescher 2.1 bis 2.3 verfügt über eine Vorderachse 8 und eine Hinterachse 9, wobei jede dieser Achsen 8, 9 entweder wie dargestellt Laufräder 10 oder wie nicht dargestellt Raupenfahrwerke umfassen kann. Typischer Weise verfügen Mähdrescher 2.1 bis 2.3 unter anderem über einen Dreschbereich 11, in welchem Körner aus den Ähren herausgelöst werden, einen Trennbereich 12, in welchem lose, in dem Stroh befindliche Körner aus diesem abgeschieden werden und einen Reinigungsbereich 13, in welchem die Körner, das Erntegut, gereinigt werden. Zudem verfügen derartige Mähdrescher 2.1 bis 2.3 über Austrag- und Verteileinrichtungen 14 zur Verteilung des aus dem jeweiligen Mähdrescher 2.1 bis 2.3 austretenden und auf dem Feldboden 15 zu verteilenden Gutstrangs, in der Regel die sogenannten Nichtkornbestandteile. Um später die Erfindung besser beschreiben zu können, werden hier zumindest die Drehachse 16 der jeweiligen Dreschtrommel 17 und die Drehachse 18 des dem jeweiligen Reinigungsbereich 13 zugeordneten Reinigungsgebläses 19 explizit genannt und in Figur 1 dargestellt.

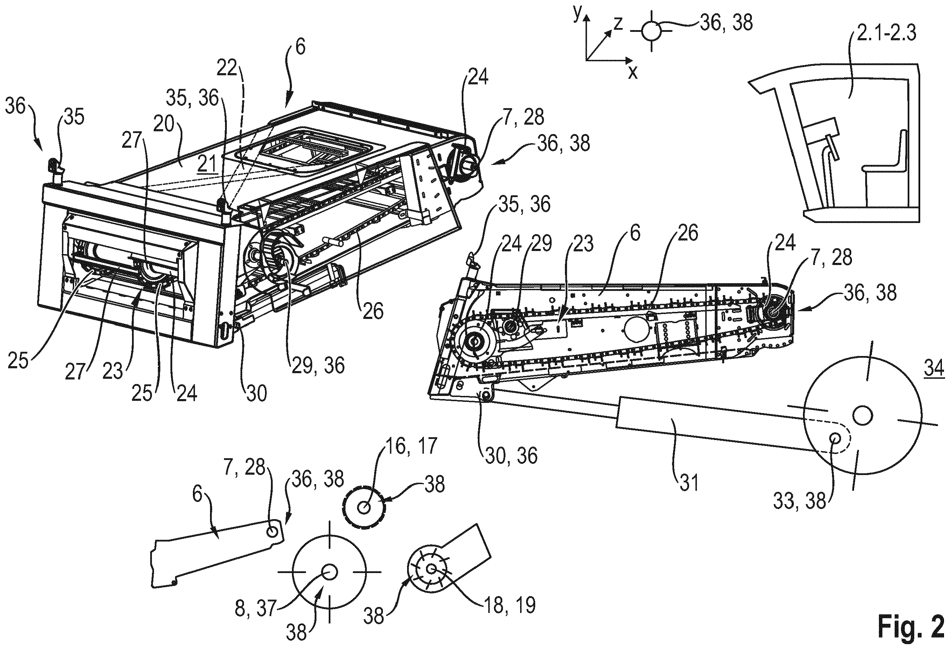

Figur 2 zeigt nun zunächst generelle Aspekte des erfindungsgemäßen Einzugskanals 6. Der jeweilige Einzugskanal 6 besteht aus einer Gehäusekonstruktion 20, deren großflächigen Gehäuseteile 21 Versteifungsstrukturen 22 umfassen können. Innenseitig nimmt die Gehäusestruktur 20 eine Gutfördereinheit 23 auf, die im Wesentlichen in an sich bekannter Weise im frontseitigen und im rückwärtigen Bereich Umlenktrommeln 24 umfasst, die beabstandet zueinander in der Regel drei oder vier Kettenräder 25 aufweisen, welche umlaufende Förderketten 26 aufnehmen, wobei die Förderketten 26 mittels als Winkelschienen ausgeführter Gutmitnehmer 27 miteinander verbunden sind. Die bereits beschriebene Schwenkachse 7 des jeweiligen Einzugskanals 6 bildet zugleich die Antriebsachse 28 der Gutfördereinheit 23. In seinem frontseitigen Bereich ist dem jeweiligen Förderkanal 6 zumindest eine Vorgelegewelle 29 zugeordnet, mittels derer eine Antriebsenergie in bekannter Weise an den jeweiligen Erntevorsatz 4 übertragen wird. Zudem sind dem Einzugskanal 6 in seinem frontseitigen Bereich Aufnahmen 30, in der Regel Verbindungsbolzen, zugeordnet welche das kolbenstangenseitige Ende von Hubzylindern 31 aufnehmen, wobei die in der Regel zwei Hubzylinder 31 die Schwenkbewegung des Einzugskanals 6 um die jeweilige Schwenkachse 7 bewirken. Anderenends sind die Hubzylinder 31 mittels Schwenkachsen 33 am Rahmen 34 des jeweiligen Mähdreschers 2.1 bis 2.3 angelenkt. Zudem verfügt der erfindungsgemäße Einzugskanal 6 front- und obenseitig über zwei Aufnahmen 35 welche eingerichtet sind, den jeweiligen Erntevorsatz 4 in an sich bekannter Weise aufzunehmen.

Erfindungsgemäß bilden im dargestellten Ausführungsbeispiel nach Figur 2 zumindest die Aufnahmen 35, die Vorgelegewelle 29, die Schwenkachse 7 des jeweiligen Einzugskanals 6 sowie die Aufnahmen 30 der Hubzylinder 31 die im Folgenden noch näher zu beschreibenden korrespondierenden Merkmale 36 des jeweiligen Einzugskanals 6. Es liegt im Rahmen der Erfindung, dass weitere oder weniger als die genannten korrespondierenden Merkmale 36 an dem jeweiligen Einzugskanal 6 vorgesehen sein können. Ein korrespondierendes Merkmal 36 des Einzugskanals 6 ist per Definition ein geometrischer Punkt 36 in einem zwei- oder dreidimensionalen Koordinatensystem, der eindeutig die Lage des jeweiligen korrespondierenden Merkmals 36 im Raum oder in einer Ebene, etwa der Seitenansicht gemäß Figur 2, beschreibt.

Erfindungsgemäß bilden zudem die im dargestellten Ausführungsbeispiel nach Figur 2 beschriebenen Schwenkachsen 33 der Hubzylinder 31, die Drehachse 37 der Vorderachse 8, die Drehachse 16 einer Dreschtrommel 17, die Drehachse 18 eines Reinigungsgebläses 19 sowie die bereits beschriebene Schwenkachse 7 des jeweiligen Einzugskanals 6 im Folgenden ebenfalls noch näher zu beschreibende, dem jeweiligen Mähdrescher 2.1 bis 2.3 zugeordnete korrespondierende Merkmale 38. Es liegt im Rahmen der Erfindung, dass weitere oder weniger als die genannten korrespondierenden Merkmale 38 an dem jeweiligen Mähdrescher 2.1 bis 2.3 vorgesehen sein können. Ein korrespondierendes Merkmal 38 des Mähdreschers 2.1 bis 2.3 ist per Definition ebenfalls ein geometrischer Punkt 38 in einem zwei- oder dreidimensionalen Koordinatensystem, der eindeutig die Lage des jeweiligen korrespondierenden Merkmals 38 im Raum oder in einer Ebene, etwa der Seitenansicht gemäß Figur 2, beschreibt.

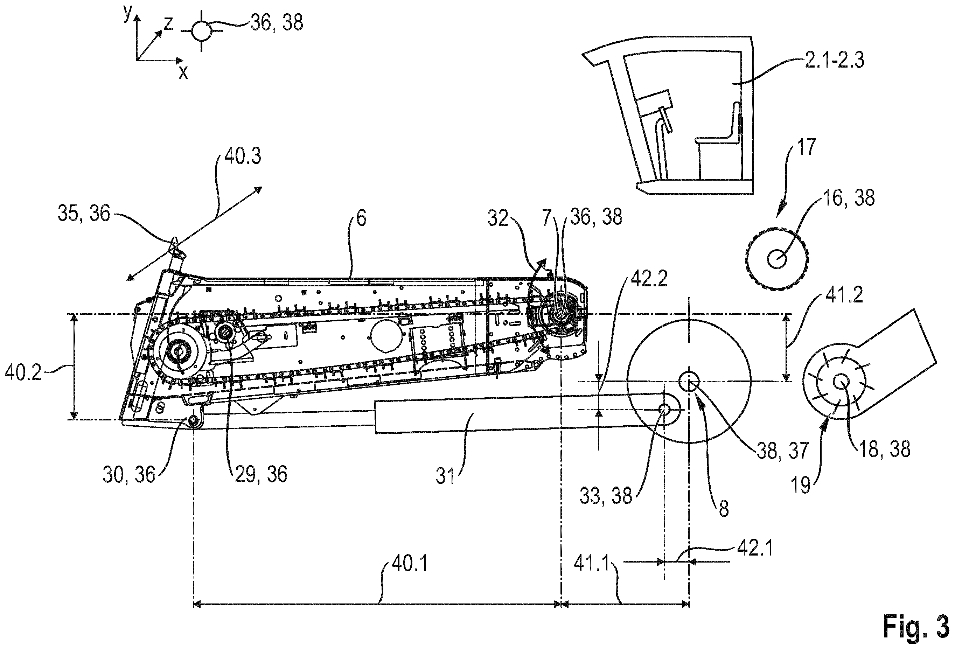

Figur 3 erläutert nunmehr das generelle Prinzip der korrespondierenden Merkmale 36, 38. Erfindungsgemäß beschreibt ein korrespondierendes Merkmal 36, 38 einen geometrischen Punkt 36, 38 in einem zwei- oder dreidimensionalen Koordinatensystem x-y-z, der eindeutig die Lage des jeweiligen korrespondierenden Merkmals 36, 38 im Raum oder in einer Ebene beschreibt. Die eindeutige Lage der korrespondierenden Merkmale 36, 38 im Raum ergibt sich erfindungsgemäß durch den Abstand 40.1 und 40.2 zweier korrespondierender Merkmale 36 des Einzugskanals 6 zueinander oder durch den Abstand 41.1 und 41.2 zweier korrespondierender Merkmale 36, 38 des Einzugskanals 6 und des Mähdreschers 2.1 bis 2.3 zueinander. Der in Figur 3 dargestellte Abstand 40.1, 40.2 zwischen den korrespondierenden Merkmalen 36 des Einzugskanals 6, hier der Aufnahme 30 des jeweiligen Hubzylinders 31 und der Schwenkachse 7 des Einzugskanals 6, ist nur beispielhaft und nicht abschließend. Besagter erfindungsgemäßer Abstand 40.1, 40.2 ergibt sich zwischen allen dem Einzugskanal 6 zugeordneten korrespondierenden Merkmalen 36, nämlich der Aufnahme 35, der Aufnahme 30, der Vorgelegewelle 29 und der Schwenkachse 7 des Einzugskanals 6, wobei sich jeweils nur der reale Wert in X- und Y-Richtung ändert. Der Abstand 40 kann auch einen Abstand 40.3 umfassen, der sich in Z-Richtung ergibt und beispielsweise den Abstand 40.3 der den Erntevorsatz 4 aufnehmenden zueinander benachbart angeordneten Aufnahmen 35 beschreibt.

Der in Figur 3 dargestellte Abstand 41.1, 41.2 zwischen den korrespondierenden Merkmalen 36, 38 des Einzugskanals 6 und des jeweiligen Mähdreschers 2.1 bis 2.3, hier der Schwenkachse 7 des Einzugskanals 6 und der Drehachse 37 der Vorderachse 8, ist nur beispielhaft und nicht abschließend. Besagter erfindungsgemäßer Abstand 41.1, 41.2 kann auch so beschaffen sein, dass sich dieser Abstand 41 zwischen einem oder mehreren der korrespondierenden Merkmale 36 des Einzugskanals 6 und einem oder mehreren der korrespondierenden Merkmale 38 des jeweiligen Mähdreschers 2.1 bis 2.3, etwa der Drehachse 37 der Vorderachse 8 und/oder der Drehachse 16 der Dreschtrommel 17 und/oder der Drehachse 18 des Reinigungsgebläses 19 ergibt, wobei sich jeweils nur der reale Wert in X- und Y-Richtung ändert.

Vor dem Hintergrund, dass die die Schwenkbewegung 32 des Einzugskanals 6 bewirkenden Hubzylinder 31 einenends mittels der Drehachse 33 schwenkbeweglich am Mähdrescher 2.1 bis 2.3 angeordnet sind, kann sich ein erfindungsgemäßer Abstand 42 zwischen korrespondierenden Merkmalen 38 auch allein zwischen den dem jeweiligen Mähdrescher 2.1 bis 2.3 zugeordneten korrespondierenden Merkmalen 38 ergeben. Beispielsweise kann sich dieser Abstand 42.1 und 42.2 zwischen den die korrespondierenden Merkmale 38 repräsentierenden Elementen Schwenkachsen 33 der Hubzylinder 31 und der Drehachse 37 der Vorderachse 8 ergeben. Es liegt auch im Rahmen der Erfindung, dass sich dieser Abstand 42.1, 42.2 zwischen besagter Schwenkachse 33 und den Drehachsen 16, 18 der Dreschtrommel 17 und des Reinigungsgebläses 19 einstellt, wobei sich auch in diesen Fällen jeweils nur der reale Wert in X- und Y-Richtung ändert.

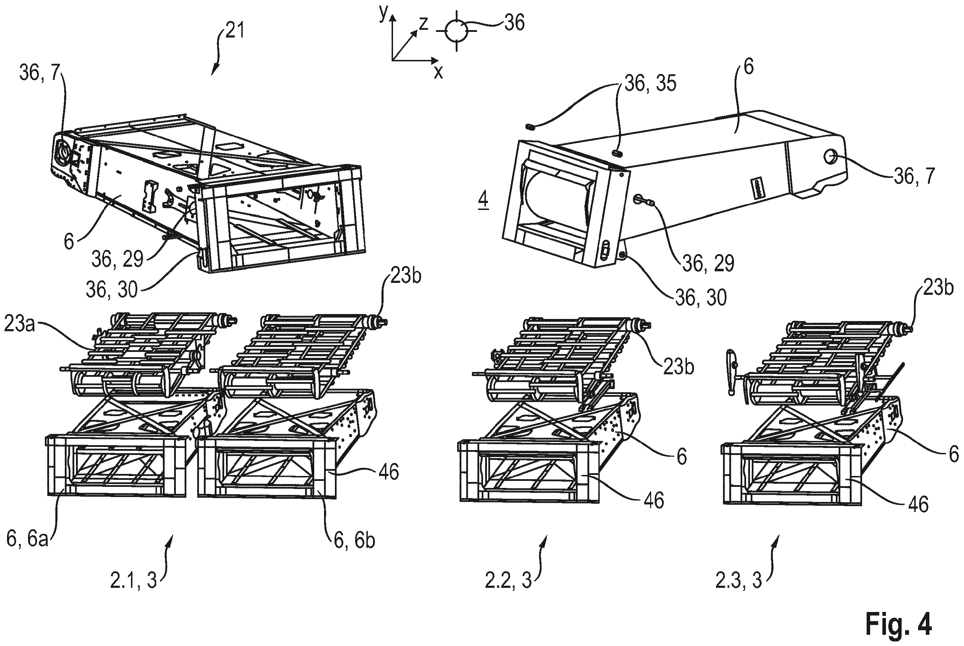

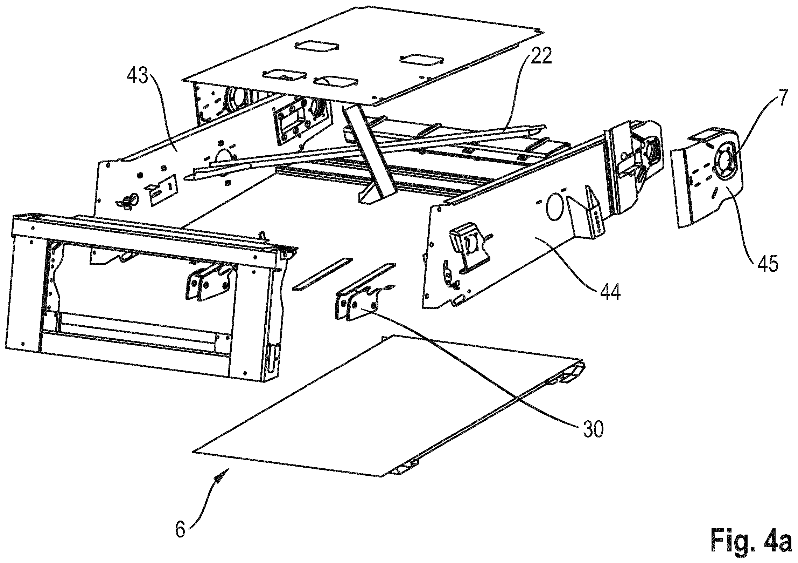

Figuren 4, 4a zeigen nun wesentliche Effekte einer Auswahl der dem jeweiligen Einzugskanal 6 zugeordneten korrespondierenden Merkmale 36 im Detail. Diese näheren Erläuterungen beziehen sich auf die korrespondierenden Merkmale Schwenkachse 7 des Einzugskanals 6, die den jeweiligen Erntevorsatz 4 aufnehmenden Aufnahmen 35, die den jeweiligen Hubzylinder 31 (in Figur 4 nicht dargestellt) aufnehmenden Aufnahmen 30 und die Vorgelegewelle 29. Indem die genannten korrespondierenden Merkmale 36 im übergeordneten Koordinatensystem x-y-z stets zueinander die gleiche Position einnehmen wird zunächst erreicht, dass die Einzugskanäle 6 aller Mähdrescher 2.1 bis 2.3 über alle Baureihen 3 dieselbe Länge aufweisen. Dies führt dazu, dass eine Vielzahl von Gehäuseteilen 21 baureihenübergreifend gleich ausgeführt sein können. Im Einzelnen sind dies vorzugsweise aber nicht ausschließlich die rechts- und linksseitigen Verkleidungsteile 43, 44, die Gehäusestruktur 45 der Schwenkachse 7 des jeweiligen Einzugskanals 6, die bereits erwähnte Versteifungsstruktur 22 sowie die die beschriebenen Hubzylinder 31 im Bereich der jeweiligen Kolbenstange tragenden Aufnahmen 30. Zudem ist es möglich die Einzugskanäle 6 einer Baureihe 3 unterschiedlich breit auszuführen, sodass für unterschiedliche Gutdurchsätze bestimmte Einzugskanäle dennoch über die oben beschriebenen Effekte der baureihenübergreifenden Verwendung gleicher Gehäuseteile 21 verfügen. Die Geeignetheit für unterschiedlich hohe Gutdurchsätze wird dadurch erreicht, dass den Einzugskanälen 6a, 6b unterschiedlich breite Gutfördereinheiten 23a, 23b zugeordnet werden können, wobei die für niedrigere Gutdurchsätze geeignete Gutfördereinheit 23b dann baureihenübergreifend verwendet wird. Dies hat zudem den Effekt, dass auch von der Breite des jeweiligen Einzugskanals abhängende Bauteile 21 in allen Baureihen 3 eingesetzt werden können. Beispielhaft sei hier der dem jeweiligen Einzugskanal 6 frontseitig zugeordnete Adaptierrahmen 46, welcher den jeweiligen Erntevorsatz 4 aufnimmt, genannt.

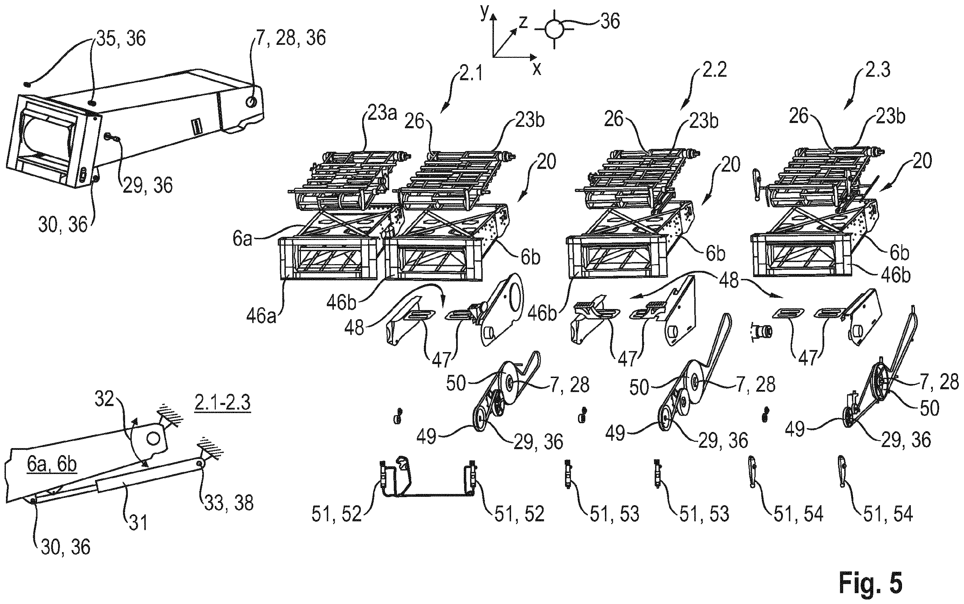

Figur 5 zeigt nun weitere Effekte einer Auswahl der dem jeweiligen Einzugskanal 6 zugeordneten korrespondierenden Merkmale 36 im Detail. Wie bereits beschrieben, hängen die äußeren Abmessungen des jeweiligen Einzugskanals 6a, 6b davon ab, ob die jeweils verwendete Gutfördereinheit 23a, 23b für hohe oder normale Gutdurchsätze ausgelegt ist. Bei Verwendung einer Gutfördereinheit 23b für normale Gutdurchsätze unterscheiden sich die Einzugskanäle 6b baureihenübergreifend 2.1 bis 2.3 in ihren äußeren Abmessungen nicht voneinander, sodass in einer äußerst vorteilhaften Ausgestaltung der Erfindung alle Einzugskanäle 6b die gleiche Gehäusekonstruktion 20, einschließlich des jeweiligen Adaptierrahmens 46 sowie die gleiche Gutfördereinheit 23b aufweisen. Dies führt zu einer erheblichen Fertigungsvereinfachung und damit einhergehenden Kostenreduzierungen. Aufgrund dieser identisch strukturierten Einzugskanäle 6a können weitere Elemente baureihenübergreifend gleich ausgeführt werden. Beispielhaft seien hier die Basiselemente 47 der jeweiligen Kettenführungen 48 der den Gutfördereinheiten 23b zugeordneten Förderketten 26 genannt. Aufgrund dessen, dass die Position der Vorgelegewelle 29 als korrespondierendes Merkmal 36 aller Einzugskanäle 6a, 6b festgelegt ist können die Vorgelegewellen 29 und die mit ihnen in Wirkverbindung stehenden Riemenscheiben 49 baureihenübergreifend gleich ausgelegt sein. Es liegt im Rahmen der Erfindung, dass die Baugleichheit auch nur für die Vorgelegewellen 29 und Riemenscheiben 49 der den niedrigeren Gutdurchsatz bewältigenden Einzugskanäle 6b umgesetzt wird. Dies hat den Effekt, dass Kosten aufgrund einer Überdimensionierung von Bauteilen entfallen. Zudem führt die baureihenübergreifend gleiche Positionierung der Vorgelegewelle 29 dazu, dass die Schnittstelle zum Antrieb des jeweiligen Erntevorsatzes 4 vereinheitlicht wird und baureihenübergreifend einheitliche Antriebe (hier nicht dargestellt) für den jeweiligen Erntevorsatz 4 unabhängig vom jeweiligen Einzugskanal 6a, 6b, also einzugskanalunabhängig, strukturiert sein können.

In analoger Weise kann aufgrund dessen, dass die Position der die Schwenkachse 7 bildenden Antriebsachse 28 ebenfalls als korrespondierendes Merkmal 36 aller Einzugskanäle 6a, 6b festgelegt ist können die jeweiligen Antriebsachsen 28 und die mit ihnen in Wirkverbindung stehenden Riemenscheiben 50 baureihenübergreifend gleich ausgelegt sein. Es liegt im Rahmen der Erfindung, dass die Baugleichheit auch nur für die Antriebsachsen 28 und Riemenscheiben 50 der den niedrigeren Gutdurchsatz bewältigenden Einzugskanäle 6b umgesetzt wird. Dies hat den Effekt, dass Kosten aufgrund einer Überdimensionierung von Bauteilen entfallen.

Indem weiter die Aufnahmen 30 der die Schwenkbewegung 32 des jeweiligen Einzugskanals 6a, 6b bewirkenden Hubzylinder 31 ebenfalls als korrespondierende Merkmale 36 ausgebildet sind kann unabhängig vom jeweiligen Einzugskanaltyp 6a, 6b baureihenübergreifend die gleiche Hubkinematik für den jeweiligen Einzugskanal 6a, 6b einschließlich des ausnutzbaren Bewegungsfreiraumes für die Umsetzung der Schwenkbewegung 32 sowie die realisierbaren Hubkräfte umgesetzt werden. Dieser Effekt wird auch dadurch noch unterstützt, dass die dem jeweiligen Mähdrescher 2.1 bis 2.3 zugeordnete Schwenkachse 33 jedes Hubzylinders 31 wie bereits beschrieben ebenfalls als korrespondierendes Merkmal 38 ausgebildet ist.

Indem ferner, wie bereits beschrieben, auch die Aufnahmen 35 baureihenübergreifend als korrespondierende Merkmale 36 ausgebildet sind, werden einerseits die Schnittstellen zum Erntevorsatz 4 vereinheitlicht, sodass die den Vorsatzgeräten 4 zugeordneten Aufnahmeeinheiten unabhängig vom Typ des jeweiligen Vorsatzgerätes 4 vereinheitlicht werden können. Am jeweiligen Einzugskanal 6a, 6b wird eine Vereinheitlichung dadurch erreicht, dass die dem jeweiligen Adaptierrahmen 46a, b zugeordneten, die Aufnahmen 35 aufnehmenden Stellelemente 51 vereinheitlicht sein können. Im einfachsten Fall sind alle Stellelemente 51 als doppeltwirkende Hubzylinder 52 gleicher Abmessungen ausgeführt. Bei gewolltem reduzierten Funktionsumfang kann auch vorgesehen sein, dass anstelle der doppelt wirkenden Hubzylinder nur einfachwirkende Hubzylinder 53 gleicher Abmessung zum Einsatz kommen, was eine weitere Herstellkostensenkung unterstützt. Im einfachsten Fall können die Stellelemente als Stützen 54 ausgebildet sein, die eine fixe Position der jeweiligen Aufnahme 35 realisieren. Dies wird dann der Fall sein, wenn der Erntevorsatz die bekannte und hier nicht weiter beschriebene Funktion Querpendeln nicht umfasst.

### Bezugszeichenliste:

| | | | |
|---|---|---|---|
| 1.1..3 | landwirtschaftliche Erntemaschine | 34 | Rahmen |
| 2.1..3 | Mähdrescher | 35 | Aufnahme |
| 3 | Baureihe | 36 | korrespondierendes Merkmal |
| 4 | Erntevorsatz | 37 | Drehachse Vorderachse |
| 5 | Erntegutbestand | 38 | korrespondierendes Merkmal |
| 6a..b | Einzugskanal | 39 | |
| 7 | Schwenkachse | 40.1..3 | Abstand |
| 8 | Vorderachse | 41.1..3 | Abstand |
| 9 | Hinterachse | 42.1..3 | Abstand |
| 10 | Laufrad | 43 | Verkleidungsteil |
| 11 | Dreschbereich | 44 | Verkleidungsteil |
| 12 | Trennbereich | 45 | Gehäusestruktur |
| 13 | Reinigungsbereich | 46 | Adaptierrahmen |
| 14 | Verteileinrichtung | 47 | Basiselement |
| 15 | Feldboden | 48 | Kettenführung |
| 16 | Drehachse | 49 | Riemenscheibe |
| 17 | Dreschtrommel | 50 | Riemenscheibe |
| 18 | Drehachse | 51 | Stellelement |
| 19 | Reinigungsgebläse | 52 | doppeltwirkender Hubzylinder |
| 20 | Gehäusekonstruktion | 53 | einfachwirkender Hubzylinder |
| 21 | Gehäuseteile | 54 | Stütze |
| 22 | Versteifungsstrukturen | 55 | |
| 23a..b | Gutfördereinheit | 56 | |
| 24 | Umlenktrommel | 57 | |
| 25 | Kettenrad | 58 | |
| 26 | Förderkette | 59 | |
| 27 | Gutmitnehmer | 60 | |
| 28 | Antriebsachse | | |
| 29 | Vorgelegewelle | | |
| 30 | Aufnahme | | |
| 31 | Hubzylinder | | |
| 32 | Schwenkbewegung | | |
| 33 | Schwenkachse | | |

## Patentansprüche

1. Einzugskanal zum Verbinden eines Erntevorsatzes mit einer als Mähdrescher ausgeführten landwirtschaftlichen Erntemaschine, wobei die landwirtschaftliche Erntemaschine Mitglied einer Baureihe ist, deren Mitglieder sich voneinander wenigstens in ihren physischen Abmessungen unterscheiden,
**dadurch gekennzeichnet, dass**
der Einzugskanal (6a, 6b) wenigstens ein erstes kanalseitiges korrespondierendes Merkmal (36) aufweist, dessen Abstand (40, 41, 42) zu wenigstens einem weiteren kanalseitigen korrespondierenden Merkmal (36) und/oder einem fahrzeugseitigen korrespondierenden Merkmal (38) der landwirtschaftlichen Erntemaschine (1, 2) baureihenübergreifend einheitlich ist.

2. Einzugskanal zum Verbinden eines Erntevorsatzes mit einer als Mähdrescher ausgeführten landwirtschaftlichen Erntemaschine nach Anspruch 1,
**dadurch gekennzeichnet, dass**
das korrespondierende Merkmal (36, 38) ein geometrischer Punkt in einem zwei- oder dreidimensionalen Koordinatensystem ist, welcher eingerichtet ist, die Lage des korrespondierenden Merkmals (36, 38) im Raum oder in der Ebene eindeutig zu beschreiben.

3. Einzugskanal zum Verbinden eines Erntevorsatzes mit einer als Mähdrescher ausgeführten landwirtschaftlichen Erntemaschine nach Anspruch 1,
**dadurch gekennzeichnet, dass**
der Abstand (40, 41, 42) ein Vektor von nichtverschwindender Länge in einem zwei- oder dreidimensionalen in Bezug auf die landwirtschaftliche Erntemaschine (1, 2) festen Koordinatensystem (X-Y-Z) ist.

4. Einzugskanal zum Verbinden eines Erntevorsatzes mit einer als Mähdrescher ausgeführten landwirtschaftlichen Erntemaschine nach einem der vorhergehenden Ansprüche,
**dadurch gekennzeichnet, dass**
der Einzugskanal (6a, 6b) zumindest eine die Schwenkachse (7) des Einzugskanals (6a, 6b) bildende Antriebsachse (28), zumindest eine die Antriebsenergie an einen Erntevorsatz (4) weiterleitende Vorgelegewelle (29), zumindest eine einen Hubzylinder (31) aufnehmende Aufnahme (30) und zumindest eine den Erntevorsatz (4) aufnehmende Aufnahme (35) umfasst und das ein, mehrere oder alle diese Elemente dem Einzugskanal (6a, 6b) zugeordneten korrespondierenden Merkmale (36, 38) bilden.

5. Einzugskanal zum Verbinden eines Erntevorsatzes mit einer als Mähdrescher ausgeführten landwirtschaftlichen Erntemaschine nach einem der vorhergehenden Ansprüche,
**dadurch gekennzeichnet, dass**
die landwirtschaftliche Erntemaschine (1, 2) zumindest eine Drehachse (16) einer Dreschtrommel (17), zumindest eine Drehachse (18) eines Reinigungsgebläses (19), zumindest eine die Schwenkachse (7) des Einzugskanals (6a, 6b) bildende Antriebsachse (28) , zumindest eine Schwenkachse (33) des zumindest einen Hubzylinders (31) und zumindest eine Drehachse (37) einer Vorderachse (8) der landwirtschaftlichen Erntemaschine (1, 2) umfasst und das ein, mehrere oder alle dieser Elemente der landwirtschaftlichen Erntemaschine (1, 2) zugeordnete korrespondierende Merkmale (38) bilden.

6. Einzugskanal zum Verbinden eines Erntevorsatzes mit einer als Mähdrescher ausgeführten landwirtschaftlichen Erntemaschine nach einem der vorhergehenden Ansprüche,
**dadurch gekennzeichnet, dass**
der Einzugskanal (6a, 6b) von Gehäuseteilen (21) gebildet wird und die Gehäuseteile (21) zumindest rechts- und linksseitige Verkleidungsteile (43 ,44), zumindest eine der Schwenkachse (7) zugeordnete Gehäusestruktur (45), zumindest eine Versteifungsstruktur (22) und den Hubzylindern (31) zugeordnete Aufnahmen (30) umfasst, wobei die dem Einzugskanal (6a, 6b) zugeordneten korrespondierenden Merkmale (36, 38) bewirken, dass zumindest die rechts- und linksseitige Verkleidungsteile (43, 44) und/oder die der Schwenkachse (28) zugeordnete Gehäusestruktur (45) und/oder die Versteifungsstruktur (22) und/oder die den Hubzylindern (31) zugeordneten Aufnahmen (30) baureihenübergreifend gleich ausgeführt sind.

7. Einzugskanal zum Verbinden eines Erntevorsatzes mit einer als Mähdrescher ausgeführten landwirtschaftlichen Erntemaschine nach einem der vorhergehenden Ansprüche,
**dadurch gekennzeichnet, dass**
die zumindest einer Baureihe (3) von Mähdreschern (2.1 bis 2.3) ein Einzugskanal (6a) für hohe Gutdurchsätze und ein Einzugskanal (6b) für niedrigere Durchsätze zugeordnet ist und wobei die Einzugskanäle (6a, 6b) dieser Baureihe (2.1) unterschiedliche Breite aufweisen und die Einzugskanäle (6a, 6b) aller Baureihen (3) die gleiche Länge aufweisen.

8. Einzugskanal zum Verbinden eines Erntevorsatzes mit einer als Mähdrescher ausgeführten landwirtschaftlichen Erntemaschine nach Anspruch 7,
**dadurch gekennzeichnet, dass**
die Einzugskanäle (6a, 6b) der Mähdrescher (2.1 bis 2.3) der weiteren Baureihen (3) dem für die niedrigeren Gutdurchsätze ausgelegten Einzugskanal (6b) entsprechen.

9. Einzugskanal zum Verbinden eines Erntevorsatzes mit einer als Mähdrescher ausgeführten landwirtschaftlichen Erntemaschine nach Anspruch 7,
**dadurch gekennzeichnet, dass**
die Gutfördereinheit (23a) des Einzugskanals (6a) für hohe Gutdurchsätze und die Gutfördereinheit (23b) des Einzugskanals (6b) für niedrigere Durchsätze zumindest unterschiedlich breit ausgeführt sind.

10. Einzugskanal zum Verbinden eines Erntevorsatzes mit einer als Mähdrescher ausgeführten landwirtschaftlichen Erntemaschine nach einem der vorhergehenden Ansprüche,
**dadurch gekennzeichnet, dass**
der Einzugskanal (6a, 6b) weiter zumindest Basiselemente (47) einer der jeweiligen Gutfördereinheit (23a,23b) zugeordneten Kettenführung (48), zumindest einen Adaptierrahmen (46), zumindest die jeweilige Vorgelegewelle (29), zumindest eine der Vorgelegewelle (29) zugeordnete Riemenscheibe (49), die jeweilige Antriebsachse (28) des jeweiligen Einzugskanals (6a, 6b), eine der Antriebsachse (28) zugeordnete Riemenscheibe (50), die den jeweilige Erntevorsatz (4) aufnehmenden Aufnahmen (35) und diesen zugeordnete Stellelemente (51) umfasst, wobei die die dem Einzugskanal zugeordneten korrespondierenden Merkmale (36) bewirken, dass zumindest die Kettenführungen (48) und/oder der jeweilige Adaptierrahmen (46) und/oder die jeweilige Vorgelegewelle (29) und/oder die der jeweiligen Vorgelegewelle (29) zugeordnete Riemenscheibe (49) und/oder die jeweilige Antriebsachse (28) des Einzugskanals (6a, 6b) und/oder die der jeweiligen Antriebsachse (28) zugeordnete Riemenscheibe (50) und/oder die den jeweiligen Erntevorsatz (4)aufnehmenden Aufnahmen (35) und/oder die diesen zugeordneten Stellelemente (51) baureihenübergreifend gleich ausgeführt sind.

11. Einzugskanal zum Verbinden eines Erntevorsatzes mit einer als Mähdrescher ausgeführten landwirtschaftlichen Erntemaschine nach Anspruch 10,
**dadurch gekennzeichnet, dass**
die baureihenübergreifend gleich ausgeführten Kettenführungen (48) und/oder Adaptierrahmen (46) und/oder Vorgelegewellen (29) und/oder der jeweiligen Vorgelegewelle (29) zugeordneten Riemenscheiben (49) und/oder die Antriebsachsen (28) des Einzugskanals (6a, 6b) und/oder die der jeweiligen Antriebsachse (28) zugeordneten Riemenscheibe (50) und/oder den jeweiligen Erntevorsatz (4) aufnehmenden Aufnahmen (35) und/oder die diesen zugeordneten Stellelemente (51) auf die Einzugskanäle (6a, 6b) für einen reduzierten Erntegutdurchsatz beschränkt sind.

12. Als Mähdrescher (2.1 bis 2.3) ausgeführte landwirtschaftliche Erntemaschine (1.1 bis 1.3) mit einem Einzugskanal (6a, 6b) nach einem oder mehreren der vorhergehenden Ansprüche.
